# EUROPEAN PATENT SPECIFICATION

(11) **EP 2 156 103 B1**
(45) Date of publication and mention of the grant of the patent: **28.08.2013**
(21) Application number: 08766970.1
(22) Date of filing: 21.05.2008
(51) Int. Cl.: F24F 5/00, A01K 1/00, E04H 5/00

(54) **ANIMAL SHELTER STRUCTURE**
TIERUNTERKUNFTSSTRUKTUR
STRUCTURE D'ABRI POUR ANIMAUX

(30) Priority: 29.05.2007 NZ 55551707
(43) Date of publication of application: 24.02.2010
(73) Proprietor: Herd Homes Limited, Whangarei 0110 (NZ)
(72) Inventor: POW, Thomas, George, Whangarei, 0110 (NZ)
(74) Representative: Duffy, Assumpta Dympna
(86) International application number: PCT/NZ2008/000121
(87) International publication number: WO 2008/147224

(56) References cited:
- WO-A1-84/02254
- WO-A1-2004/022883
- WO-A1-2004/022883
- WO-A2-2007/069916
- DE-A1- 2 756 475
- US-A- 2 889 763
- US-A- 3 677 229
- US-A- 3 938 428
- US-A- 3 951 336
- US-A- 4 776 385

## Description

### FIELD OF INVENTION

The present invention relates to animal shelters structures and related methods.

### BACKGROUND

Pugging and compaction damage of grazing pasture can occur by grazing animals, or farm vehicles and machinery. This can occur when the soil is soft such as when it is wet and the weight of the animals or vehicles cannot be adequately supported by the soil's surface. Pugging can result in poor drainage, keeping the soil soft and wet. Pugging and compaction damage can also result in reduced pasture utilisation as well as a reduction in future pasture yield, depending upon the soil type. Pugging also allows weeds and poor species of grasses to become established. Moreover, pugging and compaction damage requires more tractor passes for seed bed preparation and sowing and greater fertiliser and topsoil requirements. However, it may not always be possible to add the necessary increased fertiliser requirement due to some region's/country's regulations regarding runoff of nitrogen into the waterways.

In order to address the problem of runoff, and/or pugging and/or compaction damage of grazing pastures, stand-off pads are often used. Stand-off pads are generally purpose-built, loafing or standing spaces where stock can be held for long periods when it is not suitable to have them on pasture. This may occur for example during a wet season, inclement weather, or when it is otherwise undesirable to have cattle or other livestock on pasture.

It may also be advantageous to have animals on the stand off pads in fine weather. It keeps the animal waste in one locations and reduces animal waste being dropped on the farm land that may eventually make its way into a water system.

WO2004/022883 describes a stand off pad that includes a shelter canopy for the animals. This may protect the animals during inclement weather. It may also keep the sun of the animals in hot weather. The shelter may not cater for the extremes in temperature and wind flow in the region, to ensure that the animals are kept at or as close as possible to a desired temperature.

Furthermore, it may also be desirable to subject any animal waste matter that is dropped by the animals at the shelter to be subjected to certain environmental conditions. Primarily, an evaporate condition may be desired, where urine is evaporated away from solid waste so that the solid waste can be used at a later stage without there also being present in great quantities, the liquid waste. The environmental conditions desired for animal stand-off and for liquid waste evaporation may not always be compatible.

The invention of WO2004/022883 describes a roof that can help keep precipitation out and increase the temperature inside the structure for the purposes of aiding drying of waste matter on the floor and in the basement. However during certain times of the day it may be undesirable for animals to be located under the roof. In particular certain animals are quite sensitive to environmental conditions. In particular body temperature and heat exchange factors can have an influence on for example milk productivity of animals. Prolonged stand-off periods during hot weather can adversely affect an animal's productivity, particularly under a covered stand-off facility where air circulation may reduce heat exchange. Accordingly the invention described in WO2004/022883 has some further limitations.

WO 84/02254 discloses a poultry housing structure with a base and straight sides inclined towards an apex. The structure has an internal ceiling which can be opened to allow hot air trapped underneath the ceiling to travel towards the apex of the structure and pass out to atmosphere through an opening therein.

DE2756475 discloses an animal shelter that has a retractable ceiling element that runs generally parallel to a each side of an angled or pitched roof, each side of which is angled upwards towards an apex, from vertical side walls. The retractable ceiling element runs parallel to each side of the roof, and close to the roof.

It is an object of the present invention to provide an animal shelter structure that at least has improved performance and environmental control over that prior art and/or to at least provide the public with a useful choice.

### BRIEF DESCRIPTION OF THE INVENTION

Accordingly the present invention consists in an outdoor animal shelter structure as defined in claim 1. Preferred embodiments of the structure are defined in claims 2-13.

The outdoor animal shelter structure comprises:
a. a floor to support animals
b. a canopy, supported above said floor, for animals to stand under, said canopy able to provide at least partial shading from ambient sunlight and cover from precipitation for at least part of said floor, wherein the space between the floor and the canopy is along at least part of one side of the structure open to ambient atmospheric conditions, and
c. air flow control means to control airflow in the space between the canopy and the floor, said airflow control means being:
   a least one and preferably a plurality of parallel horizontally extending louvre board located adjacent at least one edge of the canopy yet separated therefrom to define an air inlet to said structure, said louvre boards movable to be oriented to direct part of any appropriately directed ambient airflow incident on the structure, through said inlet(s), and
d. a closable opening through said canopy that, in its open condition, can allow airflow out of the space, through said canopy, and
e. a two part movable shade cloth, wherein the parts can be moved to be positioned to be lower at regions thereof proximate more the perimeter of the structure than inwardly of the perimeter to create a stack effect for rising air below said canopy.

Preferably the shade cloth parts can be moved between at least two of three configurations, a first configuration wherein the shade cloth parts extend from opposed sides of the structure upwardly towards the upper central region of the structure, a second configuration wherein the shade cloth parts extend horizontally, and a third configuration wherein the shade cloth parts present at least one and preferably two concave face side down zones.

Preferably the structure is four sided in plan shape and at least two of the sides are at least partially open to ambient atmospheric conditions and wherein a said louvre board(s) is provided at or near each of said open sides.

Preferably the canopy is varied in height above said floor wherein the lower most parts of the canopy are disposed proximate said two opposed sides of said structure and at least one apex of the canopy is positioned intermediate thereof.

Preferably the canopy extends upwardly from each of said two opposed sides toward the apex.

Preferably the louvre board projects away from said space in a downward direction in order to encourage said ambient airflow to enter said space in an upward direction.

Preferably said canopy is uni-directionally curved and defines an elongate apex extending intermediate of two opposed sides of said structure.

Preferably said closable opening is positioned along at least part of the apex of said canopy.

Preferably the closable opening is closable by a closure that is pivotally supported to move relative said canopy between a position closing said opening and a position to allow airflow through said opening.

Preferably the floor is supported above a basement and wherein the floor includes a plurality of apertures to allow waste matter to drop through the floor and into the basement.

Preferably the floor is elevated above at least some ground adjacent to where the structure is positioned to define an opening via which part of any appropriately directed ambient airflow incident on the structure to pass into the basement.

Preferably at least one side of the structure the basement includes an opening directly exposed to ambient atmospheric conditions to allow part of any appropriately directed ambient airflow to enter the basement.

Preferably the louvre board(s) acting as the airflow control means is a movable baffle(s) provided to alter airflow through said opening to said basement.

Preferably said baffle can be positioned to scoop airflow towards said opening.

Preferably said baffle can be positioned to constrict airflow through said opening.

In a further aspect the present invention consists in a method of conditioning a dairy animal prior to it being milked, to encourage its condition towards a homeo-static physiological state to improve milk yield (whether milk quality or quantity or both), the method including moving or allowing movement of the dairy animal into a shelter structure as herein described that is configured to create an environment for the dairy animal to remain in for a duration prior to milking, that will tend the condition of the dairy animal towards the desired homeo-static physiological state.

Preferably the method includes keeping the dairy animal in the shelter structure for at least 10 minutes before advancing or allowing movement of the dairy animal from the shelter structure to a location for their milking.

Preferably the shelter structure includes environment sensors that allow at least one environment measurement to be taken and used for recordal and/or processing and/or feedback control for structure configuration.

Disclosed herein is a method of conditioning cows prior to their being milked to encourage them to or towards an optimal homeostatic physiological condition for milk productivity and/or milk quality, the method including moving or allowing movement of cows from a location where they are subjected to environmental conditions that can have an adverse effect on the physiological condition of the cows, into a shelter structure as herein described the structure configured to create an environment for the cows to remain in for a duration prior to milking that will tend the cows towards the optimal homeostatic physiological condition.

This invention may also be said broadly to consist in the parts, elements and features referred to or indicated in the specification of the application, individually or collectively, and any or all combinations of any two or more of said parts, elements or features, and where specific integers are mentioned herein which have known equivalents in the art to which this invention relates, such known equivalents are deemed to be incorporated herein as if individually set forth.

As used herein the term "and/or" means "and" or "or", or both.

As used herein "(s)" following a noun means the plural and/or singular forms of the noun.

The term "comprising" as used in this specification means "consisting at least in part of". When interpreting statements in this specification which include that term, the features, prefaced by that term in each statement, all need to be present but other features can also be present. Related terms such as "comprise" and "comprised" are to be interpreted in the same manner.

### BRIEF DESCRIPTION OF THE DRAWINGS

Further aspects of the present invention will become apparent from the following description which is given by way of example only and with reference to the accompanying drawings, in which:
Figure 1 is an end view of an animal shelter structure that includes a canopy above a ventilated covered space,
Figure 2 is an end view of an animal shelter structure showing further aspects that include adjustment means for environmental control features,
Figure 3 is an end view of an animal shelter structure showing a canopy venting feature in an open condition,
Figure 4 is an end view of an animal shelter structure showing a sensor that enables adjustment of environmental control features,
Figure 5 is a perspective view of an animal shelter structure showing one configuration of the shade cloths,
Figure 6 is a perspective view of an animal shelter structure showing another configuration of the shade cloths,
Figure 7 is an end view of Figure 5 showing the internal air circulation of an animal shelter structure.
Figure 8 is an end view of Figure 6 showing the internal air circulation of an animal shelter structure, and
Figure 9 is a perspective view of an animal shelter structure showing the features which support the shade cloths,
Figure 10 is an end view of an animal shelter structure a further configuration of the shade cloths.

### DETAILED DESCRIPTION OF THE INVENTION

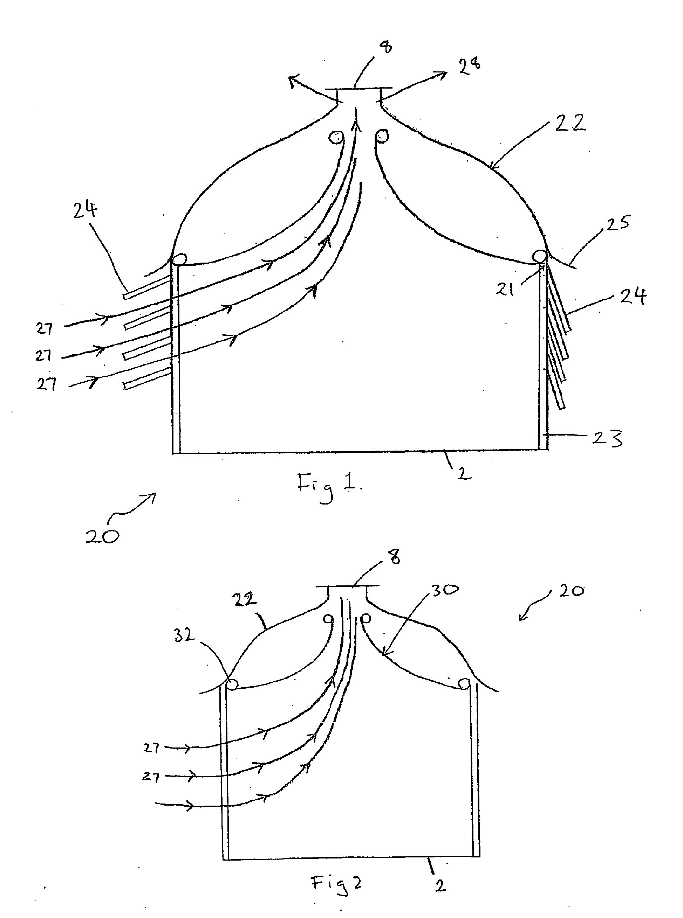

In Figure 1, there is shown an animal shelter structure 20. The structure 20 is preferably a four sided structure that includes a canopy 22 covering a covered space. The structure is preferably an open sided structure having at least one and preferably all of its four sides at least partially open. The structure 20 preferably has a curved and closed or closeable canopy 22, supported by and above side supports 23 such as posts or props.

The structure is provided with louvre boards 24 that are provided to assist in modifying the environment within the covered space. The louvre boards are preferably provided along at least two opposed sides of the structure. There is at least one louvre board at each side although a plurality of louvre boards positioned in an overlapping manner may be provided. Louvre boards 24 may extend along at least two opposing or all sides of the structure 20. Where the structure 20 is rectangular in plan shape the louvre boards are preferably located at the major opposing sides. The louvre boards 24 are preferably situated below the lower edges 25 of the canopy 22.

The louvre boards are preferably downwardly and outwardly extending from the lower edge 25 of the canopy 22. They are preferably angled at approximately 45 degrees with respect to the side supports 23 and extend generally the length of the sides of the structure 20 at where they are positioned. The angle that the louver boards 24 make with respect to the side supports 23 may be adjustable. One or more louvre boards end on end may be used. One or more at least partially overlapping louvre boards may also be used.

The louvre boards 24 may measure approximately 750 mm from the side supports 23 to their tips. Furthermore, the louvre boards 24 may be joined to the side supports 23 approximately 300 mm below the tops 21 of the side supports 23.

When in an open arrangement the louvre boards 24 allow for airflow 27 to enter into the covered space of the structure 20.

Airflow 27 passing into the covered space is initially deflected upwards by the louvre boards 24 into the upper zones of the covered space.

In figure 2, there is shown the same shelter structure 20. The structure 20 may incorporate one or more adjustable shade cloths 30. The shade cloths 30 may absorb light which enters the structure through the transparent or translucent roof 22. The shade cloths 30 may be of a material that serves to provide shade from light passing through the roof. For example during sunny weather and when animals are standing on the floor 2, shading may be desirable in order to keep the temperature of the shaded area at desired levels. The shade cloths 30 may also serve to act as a barrier for heat in the upper regions of the enclosed space above the cloths to remain separated from the area below the cloths. The shade cloths may be mounted on spools 32 to allow them to be extended and retracted.

In one configuration the shade cloths 30, when extended, allow air to travel upwardly through the structure and exit through the closable vent 8.

The configuration which the shade cloths 30 can assume internally of the structure 20 creates a "stack" effect. Air may be drawn into the covered space through the open sides of same as indicated by arrows 27. This may be assisted by louvers 24. Upon entry into the structure 20, the air is directed upwards, and due to the configuration of the shade cloth 30, the air can exit through the closable vent 8.

The end result is that the combination of louvre boards 24 and shade cloth 30 can enhance environmental conditions within the covered space. Such enhancement may, for example be to increase air circulation within the covered space to improve drying and/or evaporation of waste matter. The increased air circulation can also improve air displacement rates through the covered space to displace evaporated waste to the surrounding environment. Enhanced environmental conditions resultant from the louvre boards may also be established to aid in a cooling of animals that may be inside covered space. This may be desirable on hot days and where the temperature inside the enclosed space would otherwise be much higher than the ambient temperature.

The louvre boards may be adjustable in their position to control the nature of the airflow through the structure 20. They may be adjusted by pivoting at the inner edge of the louvre boards. They may be adjusted to an extent to close the airspace so that their effect on the airflow within the covered space is nil or minimal.

Side supports 23 preferably in the form of posts are provided for supporting the canopy 22. There are preferably no solid side walls to the structure.

The canopy 22 preferably includes a support structure and a translucent plastics cladding material. The cladding material is waterproof and preferably allows light to pass therethrough. The passing through of light can contribute to establishing a desirable environment within the covered space.

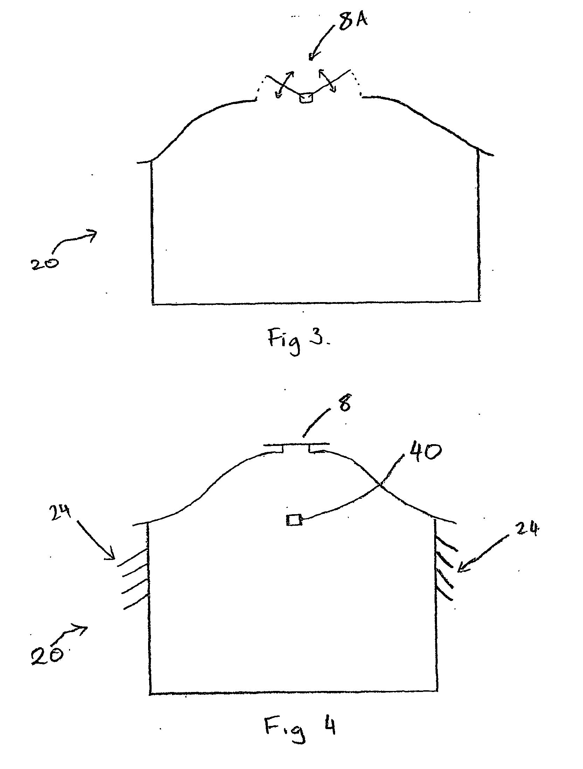

The canopy 22 may be provided with a closable vent 8. Controlling the position of the vent 8 can allow for the environment below the canopy to be controlled. With respect to Figure 1 for example, the vent 8 is open to allow airflow out of the covered space through the open vent 8, indicated by airflow 28. This can have an effect on the evaporation rate of waste matter. A vent of a different configuration is shown in Figure 3. Here the vent 8A may consist of two panels that are each independently controllable for movement between their closed and an open position. Depending on the wind direction, this may allow a venturi effect to be established aiding in the venting of air from the enclosed space out through the vent 8A. The vent 8A may also be configured to scoop air into the covered space.

The canopy 22 is preferably translucent enough to allow part of the ambient light to enter the covered space. This can allow for a heating of the space below the canopy to occur for the purposes of dehydration and/or heating of animals. One of the purposes of the shade cloth 30 is to reduce heating of animals if ambient light coming through the translucent canopy would otherwise cause over heating of the animals.

The shade cloths 30 are preferably a shade providing material. This may be in the form of a translucent material or a material that has many small apertures therethrough.

The shade providing characteristics of the shade cloths and/or the canopy may provide a full block to sunlight or at least a partial block.

The structure 20, may include at least one environment sensor 40. This is for example shown in Figure 4. The environment sensor 40 may measure temperature and/or humidity and/or airflow. This sensor may allow for such data to be collected for recordal and analysis purposes. Also the data may be used for further processing including for allowing the environment control features such as the louvre boards 24 and vent 8 to be automatically adjusted to modify the condition of the structure 20. This can allow for automated control of environmental conditions within the shelter to occur. On a hot day the sensor 40 may control components of the shelter to effect a cooling of at least some of the covered space when that is desired. On a cold day the sensor 40 may effect a reconfiguration of the shelter to result in a heating of the at least some of the covered space when that is desired. On a day with little wind the sensor 40 may effect a change in the configuration of the structure to increase air circulation and/or ventilation. As an example, the sensor 40 could adjust the louvers 24 so air is drawn into the structure 20 in an upwards or downwards direction. Furthermore, dependent on the environmental requirements the sensor 40 could adjust the louvers 24 on either side of the structure 20 to an open or closed position in combination with an open or closed position of the vent 8.

The sensor 40 may be used to detect the presence of animals to allow for the shelter structure to be configured between a configuration benefiting processing of waste material and a configuration benefiting conditioning of the animals. The sensor 40 may operate in conjunction with other controls and/or sensors and/or be pre-programmed to take account of factors such as for example regular milking times during the day where advanced conditioning of the shelter can occur prior to animals arriving.

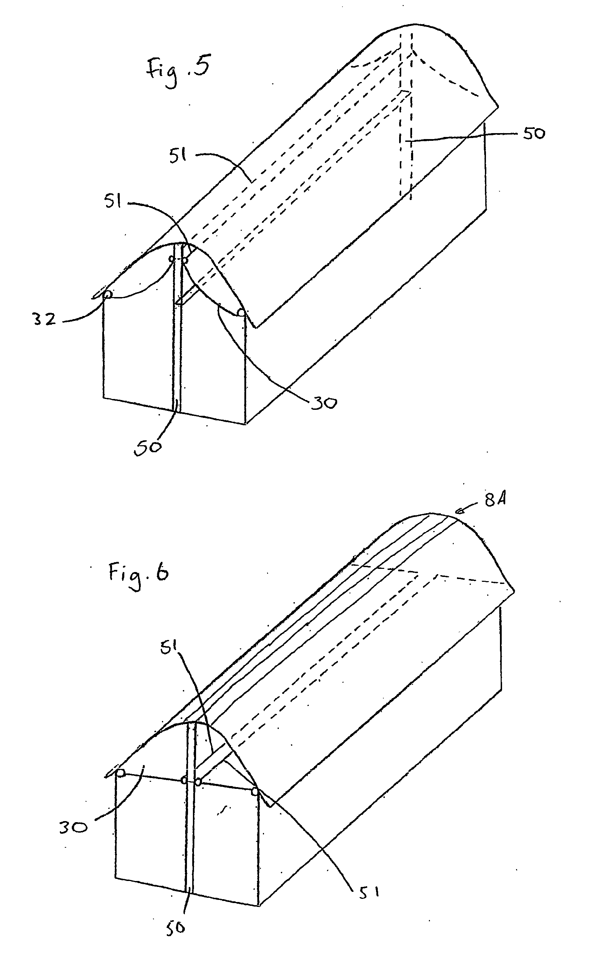

With reference to Figure 5 there is shown a shelter structure with one possible configuration of the shade cloths 30. In this configuration the shade cloths 30 extend upwardly from the spools 32. The shade cloths 30 may extend substantially into the upper, central region of the shelter structure as shown in Figure 5. The more central ends 51 of the shade cloths 30 may be supported, at their corners, to vertical support members 50.

The vertical support members 50 may facilitate the adjustment of the shade cloths 30 to enable different configurations of the shade cloths as shown with reference to Figure 6. The position of the more central ends 51 of the shade cloths 30 may be adjusted in the vertical direction. The more central ends 51 of the shade cloths 30 can move up and down the vertical support members so the shade cloths 30 may be adjusted to the desired orientation. Figure 6 shows that shade cloths 30 in a substantially horizontal orientation.

The shade cloths are preferably adjusted automatically between different configurations, but may be adjustable manually also. The automatic adjustment means may raise or lower the more central ends 51 of the shade cloths 30 in the vertical plane defined by the vertical support members 50. Automatic adjustment of the shade cloths may be due to different environmental conditions sensed by the sensor 40. Alternatively, adjustment may occur in accordance with pre-programmed instructions to take account of factors such as for example regular milking times during the day where advanced conditioning of the shelter can occur prior to animals arriving.

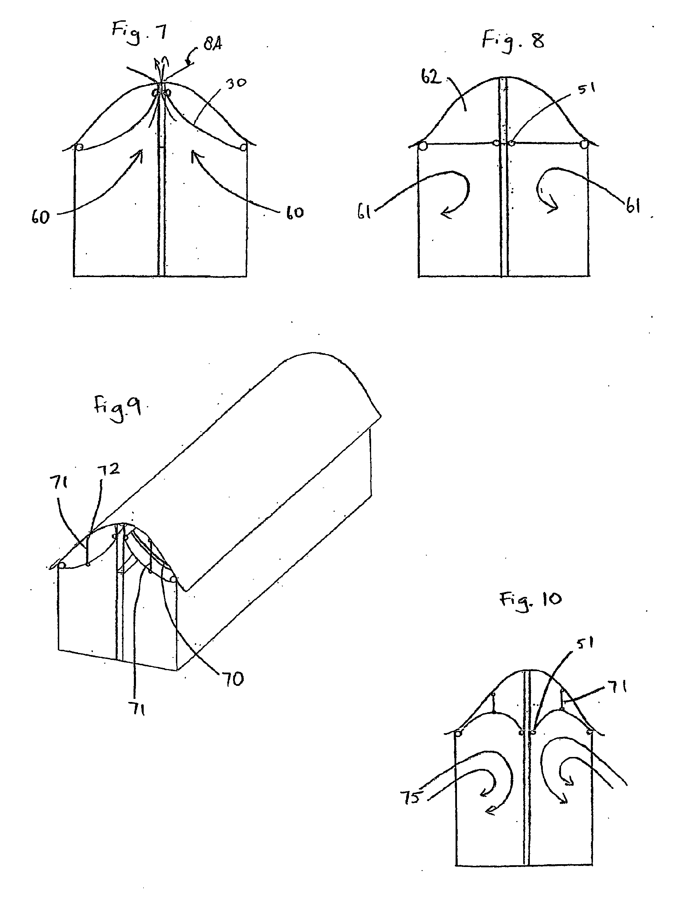

With reference to Figure 7 there is shown a shelter structure with the shade cloths 30 configured so that they extend substantially into the upper, central region of the shelter structure. This configuration may have an influence on the air circulation inside the shelter structure. Airflow 60 entering the shelter structure through the side walls may be encouraged to flow into the upper, central region of the shelter structure due to the position of the shade cloths 30. In such a configuration a "stack" effect results and the airflow 60 may be directed upwardly and exit the shelter structure through a vent in the roof.

Another configuration of the shade cloths 30 is shown with reference to Figure 8. In this particular configuration the more central ends 51 of the shade cloths 30 are lowered so that the shade cloths 30 assume a horizontal orientation inside the shelter structure. This configuration causes a "sealing" of the upper region 62 of the shelter structure and results in the inability of airflow to enter that upper region 62. Consequently, airflow 61 which enters the shelter structure may be forced in a downward direction such that it circulates in a manner as shown in Figure 8.

The shade cloths 30 may incorporate flexible battens 70 which define the shape and curvature of the shade cloths in their different configurations. As shown in Figure 9, the flexible battens 70 may create a resilience in the shade cloths to restrict them from deforming undesirably when they are in a particular configuration. The flexible battens may be disposed in a particular arrangement. Preferably the flexible battens 70 are spaced uniformly along the shade cloths 30.

Wire suspenders 71 may be incorporated into the shelter structure to control the position of the shade cloths 30. The upper end of the wire suspenders 71 may be affixed to the roof of the shelter structure at point 72. The lower end of the wire suspenders 71 may be affixed to a middle region of the shade cloths 30. There is preferably a means of adjusting the length of the wire suspenders to control the shape and position of the shade cloths 30 in various configurations. Depending on the desired configuration of the shade cloths 30, the length of the wire suspenders 71 may be increased, as shown in Figure 9 or decreased, as shown in Figure 10. The wire suspenders may be on a motorised spool which enables their length to be adjusted as desired. There may be a plurality of wire suspenders 71 positioned throughout the shelter to ensure uniformity in the shape of the shade cloths 30 across the entire shelter structure.

With reference to Figure 10 the shade cloth is in a configuration in which the more central ends 51 of the shade cloths 30 are lowered and the length of the wire suspenders 71 is decreased. In this configuration the wire suspenders "pull" the central region of the shade cloths 30 to create a concave shape in the shade cloths. Airflow 75 which enters the shelter structure may be encouraged to circulate in a manner as shown in Figure 10 due to the concavity of the shade cloths 30.

Optionally but preferably the shelter structure 20 has a slotted floor and a basement for collection of waste matter produced from the animals.

As can be understood from the foregoing description, the structure 20 can provide efficient and effective environment control for should ambient conditions not suffice or are unable to induce an appropriate environment (such as during cold and hot weather) and for at least one of two purposes, namely to condition animals and aid in dehydration of waste matter. For example, during hot weather, the vent 8 and/or the louvre boards 24 can encourage a cooling and/or shading and/or ventilating effect of at least some of the covered space. Similarly, during cold weather, the heating and/or drying and/or ventilating can be encouraged.

In use, the various environment control features may be utilised to shade and/or cool and/or ventilate the interior of a structure (for example during hot or sunny weather) as follows:
(a) The vent 8 in the canopy 22 may be opened, and the shade cloth 30 (optionally) may be configured so to produce the "stack" effect internally of the structure 20.
(b) With such an arrangement, this (warm) airflow is ultimately deflected or drawn out through the vent 8 in the canopy.
(c) At the same time, the shade cloth 30, if utilised, may serve to provide shade within the structure.
(d) At the same time, the shade material, if utilised, may serve to provide further climate control within the structure.

This configuration can result in a effective shading and/or cooling and/or ventilating effect within the interior of the structure, thus improving the welfare of animals that are within the farm structure, for example during hot or sunny weather. Indeed, we have found during trials that animals are in fact drawn to the structure (with the ventilation means arranged as described) during hot and/or sunny weather.

In a further condition the environment control features may be utilised to heat and/or dry and/or ventilate the interior of the farm structure as follows:
(a) The closable vent 8 in the canopy 22 of the structure 20 may be closed, and (if applicable) the shade cloth 30 retracted or removed.
(b) In such an condition the airflow passing through the louvers 24 will be deflected upwards, before being deflected downwards (by virtue of the nature of the curved roof and/or opposing airflows) in a spiralling motion. Smoke tests have shown that this spiralling effect covers most areas of the interior of the structure above the floor, thus leaving no or little wind shadows within the structure.
(c) At the same time, air may also be drawn into the structure 20 through the open sides. This airflow is enhanced by the presence of the louvre boards 24 and resultant spiralling effect just described.

This configuration is particularly effective during cold weather and results in an efficient heating and/or drying and/or ventilating effect.

The preferred curved canopy 22 means that air entering the covered space through the sides is immediately diffused thereby reducing its velocity and reducing its direct heat transfer effect on animals in the enclosure yet still facilitating air circulation in the structure. The overall effect is that the interior of the structure can be thoroughly heated and/or dried and/or ventilated - thus maximising the welfare of animals within the farm structure, for example during cold or inclement weather. Environmental control within the structure also has and effect on the condition of animal waste collected on the floor and/or in the basement. This has significant benefits in environmental impact of the waste and on animal welfare. We have found during trials that animals are in fact drawn to the structure (with the ventilations means arranged as described) during cold or otherwise inclement weather.

One result may also be that animals have access to a structure that may provide shelter and comfort from all types of weather all year round. This can lead to an improvement in animal welfare that may ultimately results in greater production from the animals.

The shelter allows a prolonged period of "standing off" for animals. It provides a covered area in which a herd can relax, be fed and lie down. The herd can use the shelter day after day with little labour inputs and allows farmers to maximise the farms ability to grow grass: not just when pugging is likely but also when it is advantageous for other reason to look after pasture. In summer the cows can loaf in a shelter in the shade. The result is better-conditioned, unstressed cows, which continue to produce well. Summer pasture recovers better because cows have not "milled", so production increases.

Having the ability to look after the pasture condition will increase the farm yield significantly.

Animals that feel comfortable due to the environment they are in, can become quiet allowing trouble-free stock handling.

Environmental mastitis may decrease dramatically due to stock being less exposed to muddy, wet pasture conditions.

Aspects of the present invention have been described by way of example only and it should be appreciated that modifications and additions may be made thereto without departing from the scope thereof, as defined in the appended claims.

The above mentioned parts of the invention can allow for the temperature and/or airflow in the structure to be controlled to some extent in a manner that is passive and/or non electrical and/or non chemical.

## Claims

1. An outdoor animal shelter structure (20) comprising;
a floor (2) to support animals,
a canopy (22), supported above said floor (2), for animals to stand under, said canopy (22) able to provide at least partial shading from ambient sunlight and cover from precipitation for at least part of said floor (2), wherein the space between the floor and the canopy is along at least part of one side of the structure open to ambient atmospheric conditions,
at least one horizontally extending louvre boards (24) located adjacent at least one edge of the canopy yet separated therefrom to define an air inlet to said structure, said louvre boards movable to be oriented to direct part of any appropriately directed ambient airflow incident on the structure, through said inlet(s), and thus act as a flow control means to control airflow in the space between the canopy and the floor, and
a closable opening (8) through said canopy that, in its open condition, can allow airflow out of the space, through said canopy,
**characterised in that** said shelter also comprises
a two part movable shade cloth (30), the parts of which can be moved to be positioned lower at regions thereof proximate more the perimeter of the structure than inwardly of the perimeter to create a stack effect for rising air below said canopy.

2. An outdoor animal shelter structure as claimed in claim 1, wherein there is a plurality of parallel horizontally extending louvre boards (24) located adjacent said at least one edge of the canopy yet separated therefrom to define an air inlet to said structure.

3. An outdoor animal shelter structure as claimed in claim 1 or claim 2, wherein said the parts of said shade cloth can be moved between at least two of three configurations, a first configuration wherein said part of said shade cloth extend from opposed sides of the structure upwardly towards the upper central region of the structure, a second configuration wherein said parts of said shade cloth extend horizontally, and a third configuration wherein the shade cloth presents at least one and preferably two concave face side down zones.

4. An outdoor animal shelter structure as claimed in any one of claims 1 to 3, wherein said shade cloths incorporate flexible battens which define the shape and curvature of the shade cloths in their different configurations.

5. An outdoor animal shelter structure as claimed in any one of claims 1 to 4, wherein wire suspenders are incorporated into the shelter structure to control the position of the shade cloth, an upper end of the wire suspenders affixed to the roof of the shelter structure, and a lower end of the wire suspenders affixed to a middle region of the shade cloth, with said shelter further comprising a means of adjusting the length of the wire suspenders to control the shape and position of the shade cloths.

6. A structure as claimed in any one of claims 1 to 5,wherein the structure is four sided in plan shape and at least two of the sides are at least partially open to ambient atmospheric conditions and wherein a said louvre board(s) is provided at or near each of said open sides.

7. A structure as claimed in any one of claims 1 to 6, wherein the canopy is varied in height above said floor wherein the lower most parts of the canopy are disposed proximate two opposed sides of said structure and at least one apex of the canopy is positioned intermediate thereof.

8. A structure as claimed in claim 7, wherein the canopy extends upwardly from each of said two opposed sides toward the apex; and/or wherein the louvre board projects away from said space in a downward direction in order to encourage said ambient airflow to enter said space in an upward direction.

9. A structure as claimed in any one of claims 1 to 8, wherein said canopy is unidirectionally curved and defines an elongate apex extending intermediate of two opposed sides of said structure.

10. A structure as claimed in any one of claims 7 to 9, wherein said closable opening is positioned along at least part of the apex of said canopy; and/or wherein the closable opening is closable by a closure that is pivotally supported to move relative said canopy between a position closing said opening and a position to allow airflow through said opening.

11. A structure as claimed in any one of claims 1 to 10, wherein the floor is supported above a basement and wherein the floor includes a plurality of apertures to allow waste matter to drop through the floor and into the basement; and wherein, preferably, the floor is elevated above at least some ground adjacent to where the structure is positioned to define an opening via which part of any appropriately directed ambient airflow incident on the structure to pass into the basement.

12. A structure as claimed in claim 11, wherein at least one side of the structure of the basement includes an opening directly exposed to ambient atmospheric conditions to allow part of any appropriately directed ambient airflow to enter the basement.

13. A structure as claimed in claim 12, wherein the louvre board(s) (24) acting as the airflow control means is a movable baffle(s) provided to alter airflow through said opening to said basement, and wherein preferably said movable baffle is positioned to scoop airflow towards said opening; and/or wherein said movable baffle is positioned to constrict airflow through said opening.

14. A method of conditioning a dairy animal, prior to the dairy animal being milked, to encourage the animal's condition towards a homeo-static physiological state to improve milk yield, whether milk quality or quantity or both milk quality and quantity, the method including moving or allowing movement of the dairy animal into a shelter structure as claimed in claim 1 that is configured to create an environment for the dairy animal to remain in for a duration prior to milking, that will tend the condition of the dairy animal towards the desired homeo-static physiological state.

15. A method as claimed in claim 14, that includes keeping the dairy animal in the shelter structure for at least 10 minutes before advancing or allowing movement of the dairy animal from the shelter structure to a location for their milking.

16. A method as claimed in claim 14 or 15, wherein the shelter structure includes environment sensors that allow at least one environment measurement to be taken and used for recordal and/or processing and/or feedback control for structure configuration.

## Patentansprüche

1. Außentierunterstandsstruktur (20), die Folgendes umfasst:
einen Boden (2) zum Tragen von Tieren,
eine Überdachung (22), die über dem Boden (2) abgestützt wird, unter der Tiere stehen können, wobei die Überdachung (22) mindestens teilweise Schattierung gegen Umgebungslicht und Abdeckung gegen Niederschlag für mindestens einen Teil des Bodens (2) bereitstellen kann, wobei der Raum zwischen dem Boden und der Überdachung wenigstens entlang einem Teil einer Seite der Struktur offen für Umgebungsatmosphärenbedingungen ist,
mindestens eine horizontal verlaufende Lüftungsschlitzplatte (24), die angrenzend an mindestens eine Kante der Überdachung, jedoch getrennt von derselben angeordnet ist, um einen Lufteinlass in die Struktur zu begrenzen, wobei die Lüftungsschlitzplatten beweglich sind, um so ausgerichtet zu werden, dass ein Teil eines jeglichen geeignet gerichteten Umgebungsluftstroms, der auf die Struktur auftrifft, durch den Einlass/die Einlässe geleitet wird, und somit als ein Strömungssteuermittel zum Steuern des Luftstroms in den Raum zwischen der Überdachung und dem Boden zu wirken, und
eine verschließbare Öffnung (8) durch die Überdachung, die in ihrem offenen Zustand, Luftstrom aus dem Raum heraus durch die Überdachung zulassen kann,
**dadurch gekennzeichnet, dass** der Unterstand weiter Folgendes umfasst:
ein zweiteiliges bewegliches Schattierungstuch (30), von dem Teile bewegt werden können, um an Bereichen desselben näher zum Umfang der Struktur als nach innen von dem Umfang niedriger positioniert zu werden, um eine Kaminwirkung für ansteigende Luft unter der Überdachung zu erzeugen.

2. Außentierunterstandsstruktur nach Anspruch 1, bei der eine Mehrzahl paralleler, horizontal verlaufender Lüftungsschlitzplatten (24) vorhanden ist, die angrenzend an mindestens eine Kante der Überdachung, jedoch von derselben getrennt angeordnet sind, um einen Lufteinlass in die Struktur zu begrenzen.

3. Außentierunterstandsstruktur nach Anspruch 1 oder Anspruch 2, bei der die Teile des Schattierungstuchs zwischen mindestens zwei von drei Konfigurationen bewegt werden können, eine erste Konfiguration, in der sich der Teil des Schattierungstuchs von gegenüberliegenden Seiten der Struktur nach oben in Richtung des oberen Mittelbereichs der Struktur erstreckt, eine zweite Konfiguration, in der die Teile des Schattierungstuchs sich horizontal erstrecken, und eine dritte Konfiguration, in der das Schattierungstuch mindestens eine und vorzugsweise zwei konkave Zonen mit nach unten gerichteter Stirnseite darstellt.

4. Außentierunterstandsstruktur nach einem der Ansprüche 1 bis 3, bei der die Schattierungstücher flexible Leisten enthalten, die die Form und Krümmung der Schattierungstücher in ihren unterschiedlichen Konfigurationen begrenzen.

5. Außentierunterstandsstruktur nach einem der Ansprüche 1 bis 4, bei der Drahtaufhängungen in der Unterstandsstruktur zum Steuern der Position des Schattierungstuchs eingebaut sind, wobei ein oberes Ende der Drahtaufhängungen an dem Dach der Unterstandsstruktur befestigt wird, und ein unteres Ende der Drahtaufhängungen an einem Mittelbereich des Schattierungstuchs befestigt wird, wobei der Unterstand weiter ein Mittel zum Anpassen der Länge der Drahtaufhängungen aufweist, um die Form und Position der Schattierungstücher zu steuern.

6. Struktur nach einem der Ansprüche 1 bis 5, wobei die Struktur in Draufsicht vierseitig ist und mindestens zwei der Seiten mindestens teilweise offen für Umgebungsatmosphärenbedingungen sind, und wobei eine (die) Lüftungsschlitzplatte(n) an oder nahe jeder der offenen Seiten vorgesehen ist (sind).

7. Struktur nach einem der Ansprüche 1 bis 6, bei der die Höhe der Überdachung über dem Boden variiert wird, wobei die untersten Teile der Überdachung sich nahe zwei gegenüberliegenden Seiten der Struktur befinden und mindestens eine Spitze der Überdachung zwischen denselben positioniert ist.

8. Struktur nach Anspruch 7, bei der sich die Überdachung von jeder der beiden gegenüberliegenden Seiten in Richtung der Spitze nach oben erstreckt; und/oder bei der die Lüftungsschlitzplatte von dem Raum in einer Richtung nach unten vorsteht, um Eintreten von Umgebungsluftstrom in den Raum in einer Aufwärtsrichtung zu fördern.

9. Struktur nach einem der Ansprüche 1 bis 8, bei der die Überdachung in einer Richtung gebogen ist und eine längliche Spitze begrenzt, die sich zwischen zwei gegenüberliegenden Seiten der Struktur erstreckt.

10. Struktur nach einem der Ansprüche 7 bis 9, bei der die verschließbare Öffnung entlang mindestens einem Teil der Spitze der Überdachung positioniert ist; und/oder bei der die verschließbare Öffnung durch einen Verschluss geschlossen werden kann, der schwenkbar abgestützt wird, um in Bezug zu der Überdachung zwischen einer die Öffnung verschließenden Position und einer Position bewegt zu werden, in der Luftstrom durch die Öffnung zugelassen wird.

11. Struktur nach einem der Ansprüche 1 bis 10, bei der der Boden über einem Fundament getragen wird, und bei der der Boden eine Mehrzahl von Öffnungen enthält, um Abfälle durch den Boden und in das Fundament tropfen zu lassen; und bei der der Boden vorzugsweise über mindestens etwas Erdboden angrenzend daran erhöht ist, wo die Struktur positioniert ist, um eine Öffnung zu begrenzen, über die ein Teil eines jeglichen geeignet gerichteten, auf die Struktur auftreffenden Umgebungsluftstroms in das Fundament strömen kann.

12. Struktur nach Anspruch 11, bei der mindestens eine Seite der Struktur des Fundaments eine direkt Umgebungsatmosphärenbedingungen ausgesetzte Öffnung enthält, um einen Teil eines jeglichen geeignet gerichteten Umgebungsluftstroms in das Fundament eintreten zu lassen.

13. Struktur nach Anspruch 12, bei der die als das Luftstromsteuermittel wirkende(n) Lüftungsschlitzplatte(n) (24) ein bewegliches Leitblech (bewegliche Leitbleche) darstellt (darstellen), das (die) vorgesehen ist (sind), um Luftstrom durch die Öffnung in das Fundament zu variieren, und wobei vorzugsweise das bewegliche Lenkblech positioniert ist, um Luftstrom in Richtung der Öffnung zu schaufeln; und/oder wobei das bewegliche Lenkblech positioniert ist, um Luftstrom durch die Öffnung zu begrenzen.

14. Verfahren zum Konditionieren von Milchvieh, bevor das Milchvieh gemolken wird, um den Zustand des Tiers in einen homöostatischen physikalischen Zustand zum Verbessern des Milchertrags anzuregen, sei dies Milchqualität oder -menge oder sowohl Milchqualität als auch -menge, wobei das Verfahren umfasst, das Milchvieh in eine Unterstandsstruktur nach Anspruch 1 zu bewegen oder Bewegung des Viehs in diese zuzulassen, die konfiguriert ist, um eine Umgebung für das Milchvieh zu schaffen, in der es für eine Zeitspanne vor dem Melken verbleibt, welche den Zustand des Milchviehs in den gewünschten homöostatischen physiologischen Zustand fördern wird.

15. Verfahren nach Anspruch 14, das es umfasst, das Milchvieh mindestens 10 Minuten in der Unterstandsstruktur zu halten, bevor das Milchvieh aus der Unterstandsstruktur zu einer Stelle für ihr Melken getrieben oder Bewegung zu dieser zugelassen wird.

16. Verfahren nach Anspruch 14 oder 15, bei dem die Unterstandsstruktur Umgebungssensoren enthält, die ermöglichen, dass mindestens eine Umgebungsmessung durchgeführt und zur Aufzeichnung und/oder Verarbeitung und/oder Rückmeldungssteuerung zur Strukturkonfiguration verwendet wird.

## Revendications

1. Structure extérieure d'abri pour animaux (20) comportant ;
un plancher (2) destiné à supporter des animaux,
un auvent (22), supporté au-dessus dudit plancher (2), permettant à des animaux de se tenir en dessous, ledit auvent (22) étant en mesure d'apporter un ombrage au moins partiel par rapport à la lumière ambiante du soleil et une couverture par rapport à toute précipitation pour au moins une partie dudit plancher (2), dans laquelle l'espace entre le plancher et l'auvent se trouve le long d'au moins une partie d'un côté de la structure exposée aux conditions atmosphériques ambiantes,
au moins une ou des planches à persiennes s'étendant à l'horizontale (24) situées de manière adjacente par rapport à au moins un bord de l'auvent tout en étant cependant séparées de celui-ci afin de définir une entrée d'air au niveau de ladite structure, lesdites planches à persiennes étant mobiles à des fins d'orientation pour diriger une partie de tout écoulement d'air ambiant dirigé de manière appropriée incident sur la structure, au travers de ladite (desdites) entrée(s), et pour ainsi tenir lieu de moyen de contrôle de l'écoulement servant à contrôler l'écoulement d'air dans l'espace entre l'auvent et le plancher, et
une ouverture en mesure d'être fermée (8) au travers dudit auvent qui, dans son état ouvert, peut permettre de faire sortir tout écoulement d'air de l'espace, au travers dudit auvent,
**caractérisée en ce que** ledit abri comporte aussi
un tissu à store mobile en deux parties (30), dont les parties peuvent être déplacées pour être positionnées plus bas au niveau de régions de celui-ci plus à proximité du périmètre de la structure que vers l'intérieur du périmètre afin de créer un effet de cheminée en vue de faire monter l'air sous ledit auvent.

2. Structure extérieure d'abri pour animaux selon la revendication 1, dans laquelle il y a une pluralité de planches à persiennes parallèles s'étendant à l'horizontale (24) situées de manière adjacente par rapport à au moins un bord de l'auvent tout en étant cependant séparées de celui-ci afin de définir une entrée d'air au niveau de ladite structure.

3. Structure extérieure d'abri pour animaux selon la revendication 1 ou la revendication 2, dans laquelle lesdites parties dudit tissu à store peuvent être déplacées entre au moins deux parmi trois configurations, une première configuration dans laquelle ladite partie dudit tissu à store s'étend en provenance des côtés opposés de la structure vers le haut vers la région centrale supérieure de la structure, une seconde configuration dans laquelle lesdites parties dudit tissu à store s'étendent à l'horizontale, et une troisième configuration dans laquelle le tissu à store présente au moins une et de préférence deux zones concaves au côté orienté vers le bas.

4. Structure extérieure d'abri pour animaux selon l'une quelconque des revendications 1 à 3, dans laquelle lesdits tissus à store incorporent des lattes flexibles qui définissent la forme et la courbure des tissus à store dans leurs différentes configurations.

5. Structure extérieure d'abri pour animaux selon l'une quelconque des revendications 1 à 4, dans laquelle des organes de suspension métalliques sont incorporés dans la structure d'abri pour contrôler la position du tissu à store, une extrémité supérieure des organes de suspension métalliques étant fixée sur le toit de la structure d'abri, et une extrémité inférieure des organes de suspension métalliques étant fixée sur une région intermédiaire du tissu à store, ledit abri comportant par ailleurs un moyen permettant d'ajuster la longueur des organes de suspension métalliques à des fins de contrôle de la forme et de la position des tissus à store.

6. Structure selon l'une quelconque des revendications 1 à 5, dans laquelle la structure est d'une forme à quatre côtés en plan et au moins deux des côtés sont au moins partiellement exposés aux conditions atmosphériques ambiantes et dans laquelle l'une desdites planches à persiennes est mise en oeuvre au niveau ou à proximité de chacun desdits côtés ouverts.

7. Structure selon l'une quelconque des revendications 1 à 6, dans laquelle l'auvent est varié en termes de hauteur au-dessus dudit plancher, dans laquelle les parties les plus en bas de l'auvent sont disposées à proximité de deux côtés opposés de ladite structure et au moins un sommet de l'auvent est positionné entre eux.

8. Structure selon la revendication 7, dans laquelle l'auvent s'étend vers le haut en provenance de chacun desdits deux côtés opposés vers le sommet ; et/ou dans laquelle la planche à persiennes fait saillie à l'opposé dudit espace dans une direction allant vers le bas afin d'encourager ledit écoulement d'air ambiant à entrer dans ledit espace dans une direction allant vers le haut.

9. Structure selon l'une quelconque des revendications 1 à 8, dans laquelle ledit auvent est courbe de manière unidirectionnelle et définit un sommet allongé s'étendant de manière intermédiaire entre deux côtés opposés de ladite structure.

10. Structure selon l'une quelconque des revendications 7 à 9, dans laquelle ladite ouverture en mesure d'être fermée est positionnée le long d'au moins une partie du sommet dudit auvent ; et/ou dans laquelle l'ouverture en mesure d'être fermée est en mesure d'être fermée par un élément de fermeture qui est supporté de manière pivotante à des fins de mouvement par rapport audit auvent entre une position fermant ladite ouverture et une position permettant l'écoulement d'air au travers de ladite ouverture.

11. Structure selon l'une quelconque des revendications 1 à 10, dans laquelle le plancher est supporté au-dessus d'un sous-sol et dans laquelle le plancher comprend une pluralité d'ouvertures pour permettre aux déchets de passer au travers du plancher jusque dans le sous-sol ; et dans lequel, de préférence, le plancher est élevé au-dessus d'au moins un sol adjacent au niveau du lieu de positionnement de la structure afin de définir une ouverture par le biais de laquelle une partie de tout écoulement d'air ambiant dirigé de manière appropriée incident sur la structure peut passer jusque dans le sous-sol.

12. Structure selon la revendication 11, dans laquelle au moins un côté de la structure du sous-sol comprend une ouverture directement exposée aux conditions atmosphériques ambiantes afin de permettre à une partie de tout écoulement d'air ambiant dirigé de manière appropriée d'entrer dans le sous-sol.

13. Structure selon la revendication 12, dans laquelle la (les) planche(s) à persiennes (24) tenant lieu de moyen de contrôle de l'écoulement d'air est/sont une ou des chicanes mobiles mises en oeuvre pour modifier l'écoulement d'air au travers de ladite ouverture jusque dans ledit sous-sol, et dans laquelle de préférence ladite chicane mobile est positionnée pour prendre et accompagner l'écoulement d'air vers ladite ouverture ; et/ou dans laquelle ladite chicane mobile est positionnée pour restreindre l'écoulement d'air au travers de ladite ouverture.

14. Procédé de traitement d'un animal laitier, avant la traite de l'animal laitier, pour encourager l'état de l'animal à atteindre un état physiologique homéostatique en vue d'améliorer la production de lait, qu'il s'agisse de la qualité ou de la quantité du lait ou à la fois de la qualité et de la quantité du lait, le procédé comprenant déplacer ou permettre le mouvement de l'animal laitier dans une structure d'abri selon la revendication 1 qui est configurée pour créer un environnement dans lequel l'animal laitier reste pendant une période de temps avant la traite, ce qui permettra de s'occuper de l'état de l'animal laitier pour lui faire atteindre l'état physiologique homéostatique souhaité.

15. Procédé selon la revendication 14, qui comprend le maintien de l'animal laitier dans la structure d'abri pendant au moins 10 minutes avant de faire avancer ou de permettre le mouvement de l'animal laitier depuis la structure d'abri jusqu'à un emplacement destiné à la traite.

16. Procédé selon la revendication 14 ou la revendication 15, dans lequel la structure d'abri comprend des capteurs d'environnement qui permettent de prendre au moins une mesure d'environnement et de l'utiliser à des fins d'enregistrement et/ou de traitement et/ou de contrôle de retour pour la configuration de la structure.
